# EUROPEAN PATENT APPLICATION

(11) **EP 4 394 662 A1**
(43) Date of publication of application: **03.07.2024**
(21) Application number: 22942388.4
(22) Date of filing: 27.09.2022
(51) Int. Cl.: G06N 3/08

(54) **TRAINING METHOD, APPARATUS AND SYSTEM FOR DEEP LEARNING MODEL, AND DEVICE AND MEDIUM**

(30) Priority: 19.05.2022 CN 202210559489
(71) Applicant: Beijing Baidu Netcom Science Technology Co., Ltd., Beijing 100085 (CN)
(72) Inventor: ZHANG, Minxu, Beijing 100085 (CN); WANG, Haifeng, Beijing 100085 (CN); ZHANG, Fan, Beijing 100085 (CN); WU, Xinxuan, Beijing 100085 (CN); YAO, Xuefeng, Beijing 100085 (CN); FENG, Danlei, Beijing 100085 (CN); WU, Zhihua, Beijing 100085 (CN); TAN, Zhipeng, Beijing 100085 (CN); DING, Jie, Beijing 100085 (CN); YU, Dianhai, Beijing 100085 (CN)
(74) Representative: Stöckeler, Ferdinand
(86) International application number: PCT/CN2022/121697
(87) International publication number: WO 2023/221360

(57) **Abstract**

The present disclosure provides a method of training a deep learning model, which relates to a field of artificial intelligence, and specifically to fields of deep learning and intelligent recommendation. A specific implementation solution of the method of training the deep learning model includes: determining, according to first training data for a current training round, a first target parameter required to be written into a target memory in a first network parameter required by an embedding of the first training data, wherein the target memory is a memory contained in a target processor; determining a remaining storage slot in the target memory according to a first mapping relationship between a storage slot of the target memory and a network parameter; and writing, in response to the remaining storage slot meeting a storage requirement of the first target parameter, the first target parameter into the target memory so that a computing core contained in the target processor adjusts the first network parameter according to the first training data.

## Description

This application claims priority to Chinese Patent Application No. 202210559489.0 filed on May 19, 2022, which is incorporated herein by reference in its entirety.

### TECHNICAL FIELD

The present disclosure relates to a field of artificial intelligence, and specifically to fields of deep learning and intelligent recommendation. In particular, the present disclosure relates to a method, an apparatus and a system of training a deep learning model, an electronic device, and a storage medium.

### BACKGROUND

With a development of a computer technology, a network technology and a communication technology, an application of deep learning and other technologies in fields such as intelligent recommendation is increasingly popular. With a promotion of a big data wave and a significant development of a deep learning technology, a data size and a model size in the deep learning technology have increased significantly. Accordingly, a high requirement is placed on a hardware environment in model training, and the training generally requires a high time cost.

### SUMMARY

The present disclosure aims to provide a method, an apparatus and a system of training a deep learning model, an electronic device, and a storage medium that may help to reduce a hardware requirement and implement training of a large-scale model.

According to an aspect of the present disclosure, a method of training a deep learning model is provided, including: determining, according to first training data for a current training round, a first target parameter required to be written into a target memory in a first network parameter required by an embedding of the first training data, wherein the target memory is a memory contained in a target processor; determining a remaining storage slot in the target memory according to a first mapping relationship between a storage slot of the target memory and a network parameter; and writing, in response to the remaining storage slot meeting a storage requirement of the first target parameter, the first target parameter into the target memory so that a computing core contained in the target processor adjusts the first network parameter according to the first training data.

According to an aspect of the present disclosure, a method of training a deep learning model is provided, including: determining, by using a first processor according to first training data for a current training round, a first target parameter required to be written into a target memory in a first network parameter required by an embedding of the first training data, wherein the target memory is a memory contained in a second processor; determining, by using the first processor, a remaining storage slot in the target memory according to a first mapping relationship between a storage slot of the target memory and a network parameter; writing, by using the first processor in response to the remaining storage slot meeting a storage requirement of the first target parameter, the first target parameter into the target memory, and transmitting a training task information to the second processor, wherein the training task information is based on the first training data; and adjusting, by using a computing core of the second processor in response to receiving the training task information, the first network parameter according to the first training data.

According to an aspect of the present disclosure, an apparatus of training a deep learning model is provided, including: a target-parameter determination module configured to determine, according to first training data for a current training round, a first target parameter required to be written into a target memory in a first network parameter required by an embedding of the first training data, wherein the target memory is a memory contained in a target processor; a remaining-slot determination module configured to determine a remaining storage slot in the target memory according to a first mapping relationship between a storage slot of the target memory and a network parameter; and a parameter writing module configured to write, in response to the remaining storage slot meeting a storage requirement of the first target parameter, the first target parameter into the target memory so that a computing core contained in the target processor adjusts the first network parameter according to the first training data.

According to an aspect of the present disclosure, a system of training a deep learning model is provided, including a first processor and a second processor, wherein the second processor includes a target memory and a computing core; the first processor is configured to: determine, according to first training data for a current training round, a first target parameter required to be written into a target memory in a first network parameter required by an embedding of the first training data; determine a remaining storage slot in the target memory according to a first mapping relationship between a storage slot of the target memory and a network parameter; and write, in response to the remaining storage slot meeting a storage requirement of the first target parameter, the first target parameter into the target memory, and transmit a training task information to the second processor, wherein the training task information is based on the first training data; and the second processor is configured to: adjust, by using a computing core in response to receiving the training task information, the first network parameter according to the first training data.

According to another aspect of the present disclosure, an electronic device is provided, including: at least one processor; and a memory communicatively connected to the at least one processor, wherein the memory stores instructions executable by the at least one processor, and the instructions are configured to, when executed by the at least one processor, cause the at least one processor to implement the method of training the deep learning model provided in the present disclosure.

According to another aspect of the present disclosure, a non-transitory computer-readable storage medium having computer instructions therein is provided, and the computer instructions are configured to cause a computer to implement the method of training the deep learning model provided in the present disclosure.

According to another aspect of the present disclosure, a computer program product containing computer program/instructions is provided, and the computer program/instructions is/are configured to, when executed by a processor, cause the processor to implement the method of training the deep learning model provided in the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 shows an application scenario architecture diagram of a method, an apparatus and a system of training a deep learning model according to embodiments of the present disclosure;
FIG. 2 shows a schematic flowchart of a method of training a deep learning model according to embodiments of the present disclosure;
FIG. 3 shows a schematic flowchart of a method of training a deep learning model according to another embodiment of the present disclosure;
FIG. 4 shows a schematic structural diagram of a processor cache according to embodiments of the present disclosure;
FIG. 5 shows an overall schematic flowchart of a method of training a deep learning model according to embodiments of the present disclosure;
FIG. 6 shows a communication topology diagram of a single-machine multi-card processor according to embodiments of the present disclosure;
FIG. 7 shows a schematic diagram of training a model in a form of an asynchronous pipeline according to embodiments of the present disclosure;
FIG. 8 shows a structural block diagram of an apparatus of training a deep learning model according to embodiments of the present disclosure;
FIG. 9 shows a structural block diagram of a system of training a deep learning model according to embodiments of the present disclosure; and
FIG. 10 shows a block diagram of an electronic device for implementing a method of training a deep learning model according to embodiments of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those ordinary skilled in the art should realize that various changes and modifications may be made to embodiments described herein without departing from the scope and spirit of the present disclosure. Likewise, for clarity and conciseness, descriptions of well-known functions and structures are omitted in the following description.

With a promotion of a big data wave and a development of a deep learning technology, a data size and a model size in an industrial recommendation scenario have increased significantly. For example, in order to improve an accuracy of a recommendation model, it is generally needed to generate training samples according to hundreds of millions of click data so as to train the recommendation model. In the recommendation model, an embedding technology is generally used to convert high-dimensional sparse feature vectors of objects (users and items, etc.) into low-dimensional dense feature vectors. Therefore, an amount of parameters involved in the embedding technology often reaches hundreds of billions or even trillions, and the parameters involved are sparse.

In order to perform the training of large-scale sparse parameters, a CPU or GPU-based parameter server architecture may be used to perform a distributed training on the large-scale sparse parameters, so as to improve a training efficiency.

The parameter server architecture may include, for example, HugeCTR, Paddle-GPUPS, and Persia, etc.

For example, HugeCTR is a framework that uses GPU to accelerate the training of a recommendation model. Such framework supports a multi-machine and multi-card acceleration, and supports a hybrid training method in which a model parallel training is performed on an embedding layer with sparsely distributed parameters and a data parallel training is performed on a network with densely distributed parameters. HugeCTR divides the embedding layer into a plurality of portions and allocate them to a plurality of machines and a plurality of cards respectively. Each GPU stores a portion of the global embedding layer, and each GPU has a complete network with densely distributed parameters. When training the recommendation model, global sample data may be randomly shuffled and divided, and each GPU is allocated with different sample data, so as to perform data parallel training.

For HugeCTR, two methods of embedding layer storage are supported, one is to cache sparse parameters belonging to a same slot in a graphics card memory of a same GPU; the other is to shuffle a full amount of sparse parameters and store them in graphics card memories of different GPUs. In both methods, there may be a case that some sparse parameters are repeatedly cached, which may cause a certain degree of waste of graphics card memory. Moreover, HugeCTR requires a plurality of CPUs to participate in the model training, which causes a problem of a high training cost.

For example, an emergence of Paddle-GPUPS solves a problem of high training costs for hundreds of CPU servers. In such architecture, a High Bandwidth Memory (HBM) hash table is constructed on each GPU. Before the training starts, such architecture firstly loads a sparse parameter required for embedding a feature of currently acquired data in a pass from a CPU memory to a graphics card memory. When loading, the sparse parameters required by a same feature group are shuffled and stored in different graphics card memories. Then, when training the model according to a batch of data extracted from a pass, each GPU needs to copy the required sparse parameters from other graphics card memories according to a feature sign. During the training process of such architecture, a communication overhead between GPUs is large, and there is a high requirement for a size of the graphics card memory due to the construction and storage of the HBM hash table on each GPU.

For example, Persia is a recommendation model training framework for large-scale heterogeneous cluster training. Such framework may achieve a maximum trainable model parameter size at a level of hundreds of trillions through a collaborative optimization in both dimensions of training algorithm and training system. Such framework asynchronously updates the embedding layer, synchronously updates the network with densely distributed parameters, and allows a temporal overlap of partial communication process and calculation process through a system optimization. Such framework introduces a role of Embedding Worker in a traditional framework, and a training and updating task of the embedding layer is separated from a training task of an overall model and handed over to Embedding Worker for execution. Such framework requires a significant amount of CPUs to introduce Embedding Worker, which may increase the training cost of the model.

In addition, in order to improve the training efficiency of the model, various artificial intelligence (AI) chips have emerged to accelerate a computing power of neural networks, such as Deep learning Processing Unit (DPU), Neural Network Processing Unit (NPU) and Tensor Processing Unit (TPU), etc.

For example, Kunlunxin2 chip is a general-purpose AI chip that uses GDDR6 memory. The chip is based on XPU-R architecture, which may significantly improve a core computing power of computing and enhance a general computing capability of the chip.

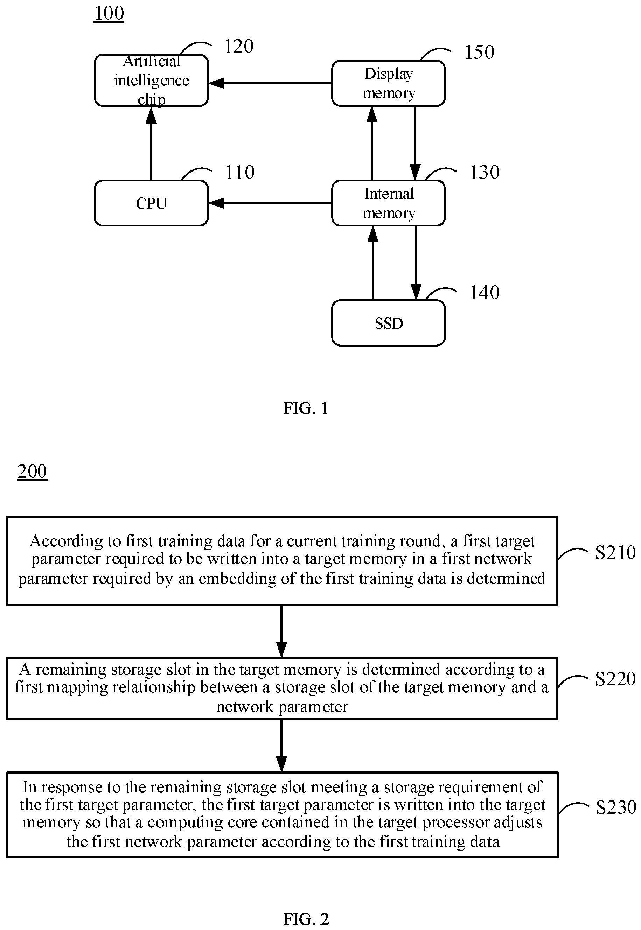

An application scenario of the methods and apparatuses provided by the present disclosure will be described below with reference to FIG. 1.

FIG. 1 shows an application scenario diagram of a method, an apparatus and a system of training a deep learning model according to embodiments of the present disclosure.

As shown in FIG. 1, an application scenario 100 includes an electronic device, which may be a notebook computer, a desktop computer, or a server, etc. The electronic device is provided with a processor CPU 110, an artificial intelligence chip 120, an internal memory 130, and a hard disk storage 140.

The internal memory 130 refers to a working memory, which is a space used by the CPU 110 for direct addressing and storage. The internal memory may temporarily store running data in the CPU and data exchanged with an external memory such as hard disk. As long as the computer is running, the CPU may transfer data that needs to be calculated into the internal memory for calculation, and when the calculation is completed, the CPU may transmit a result. The internal memory 130 may be, for example, a random access memory, so that the CPU may read data from the internal memory and write data into the internal memory.

The hard disk processor 140 may be, for example, a solid state disk (SSD) with an NVMe interface, etc., which is not limited in the present disclosure.

The artificial intelligence chip has a data processing capability, which may assist the CPU in working and improve an overall operating speed. The artificial intelligence chip may include, for example, the DPU, NPU or TPU described above. The artificial intelligence chip 120 may include a computing core, a video memory and related circuits. The video memory is a display memory 150, which is a dedicated memory of the artificial intelligence chip and used to store rendering data that has been processed or is to be extracted by the computing core. Similar to the internal memory 130, the display memory 150 is used to store a model parameter to be processed, a training sample, and other information.

The computing core in the artificial intelligence chip 120 may not directly read the data in the internal memory 130, and may just read data from the display memory 150. The CPU may assign a computing task to the computing core. During an execution of the computing task by the computing core, under the control of the CPU 110, a data interaction may be performed between the internal memory 130 and the display memory 150, so that the data required by the computing core to perform the computing task may be copied from the internal memory 130 to the display memory 150, or the data in the internal memory 130 may be directly transferred to the display memory 150.

When training a model constructed based on the deep learning technology, the CPU 110 may assign, for example, a training task to the artificial intelligence chip 120 and transfer the model from the internal memory 130 to the display memory 150. In an embodiment, the model may be stored in a hard disk storage space provided by the hard disk storage 140. A three-level cache space composed of the display memory 150, the internal memory 130 and the hard disk storage 140 is established. Then, when the model is stored in the hard disk storage 140, during the model training process, the CPU 110 may read data from the hard disk storage 140 and cache the data to the internal memory according to training needs. When the CPU 110 assigns the training task to the artificial intelligence chip 120, the model parameter involved in performing a current calculation task by the computing core is transferred from the internal memory 130 to the display memory 150, and the data processed by the computing core stored in the display memory 150 is transferred from the display memory 150 to the internal memory 130, so as to avoid an insufficient storage space of the display memory.

In an embodiment, the electronic device may be provided with, for example, a plurality of artificial intelligence chips. The plurality of artificial intelligence chips may perform model training tasks in parallel according to different training samples, so as to improve the training efficiency of the model.

It may be understood that the method of training the deep learning model provided in the present disclosure may be performed by the electronic device, and specifically may be implemented by calling corresponding program codes by the CPU or the artificial intelligence chip. Accordingly, the apparatus of training the deep learning model and the system of training the deep learning model provided in the present disclosure may be arranged in the electronic device.

The method of training the deep learning model provided by the present disclosure will be described in detail below with reference to FIG. 2 to FIG. 7.

FIG. 2 shows a schematic flowchart of a method of training a deep learning model according to embodiments of the present disclosure.

As shown in FIG. 2, a method 200 of training a deep learning model in such embodiments may include operation S210 to operation S230. The method 200 may be performed by, for example, the CPU in the electronic device described above.

In operation S210, according to first training data for a current training round, a first target parameter required to be written into a target memory in a first network parameter required by an embedding of the first training data is determined.

In operation S220, a remaining storage slot in the target memory is determined according to a first mapping relationship between a storage slot of the target memory and a network parameter.

In operation S230, in response to the remaining storage slot meeting a storage requirement of the first target parameter, the first target parameter is written into the target memory so that a computing core contained in the target processor adjusts the first network parameter according to the first training data.

According to embodiments of the present disclosure, the target memory may be, for example, a memory contained in the target processor. The target processor may be, for example, the artificial intelligence chip described above, and may also be a graphics processing unit GPU or the like. The target processor may receive the computing task assigned by the CPU, and perform the assigned computing task according to the data stored in the target memory. The computing task may include, for example, a model training task to train a deep learning model. The deep learning model may include, for example, an image processing model, a speech processing model, or a text processing model. In a specific scenario, the deep learning model may be a recommendation model, and such embodiments may be implemented to train the recommendation model by gradient descent and other methods based on massive user interaction behavior information on recommended objects. After a model parameter of the recommendation model converges, it is possible to perform a personalized recommendation to users.

In an embodiment, the deep learning model may include, for example, an embedding layer and a prediction network. The embedding layer is used to perform an embedding on the data input into the deep learning model, so as to project the input data from a high-dimensional sparse space to a low-dimensional dense feature space. In embodiments of the present disclosure, the first network parameter required by the embedding of the first training data is a network parameter in the embedding layer. The first network parameter may be determined by, for example, calling a kernel function.

In an embodiment, the determined first network parameter may be compared with a network parameter stored in the target memory, and the network parameter not stored in the target memory in the first network parameter may be determined as the first target parameter required to be written into the target memory. Alternatively, in such embodiments, the first network parameter may also be compared with the network parameter stored in the internal memory and/or the hard disk processor, and the network parameter stored in the internal memory and/or the hard disk processor in the first network parameter may be determined as the first target parameter. It may be understood that, when comparing the network parameters, the comparison may be performed according to feature signs (referred to as Feasign for short) of the data embedded based on the network parameters.

For example, a training sample may include feature data of a plurality of objects, each object may include a plurality of feature data, and one feature data corresponds to a feature sign. For each feature data, the embedding needs to be performed using a fixed network parameter. For example, in embodiments of the present disclosure, the network parameter of the embedding layer may be stored according to a correspondence between the network parameter and the feature data, and the feature sign of the corresponding feature data may be added to the network parameter.

In an embodiment, the CPU may maintain a mapping relationship table between the feature sign of the feature data and the network parameter stored in the target memory in the cache or internal memory. In the mapping relationship table, the feature sign is used as Key, and an identification information of the network parameter having the mapping relationship is used as Value. In such embodiments, it is possible to query the mapping relationship table according to the feature sign of the feature data included in the first training data, and determine the feature sign that does not exist in the mapping relationship table. The network parameter used for the embedding of the feature data identified by the non-existing feature sign in the first network parameter is determined as the first target parameter.

It may be understood that the network parameter stored in the target memory may be stored by slot, for example. The network parameters stored in each slot are all network parameters corresponding to one feature data. That is, the network parameters may be stored in groups, and all network parameters corresponding to one feature data constitute a network parameter group. Accordingly, the target memory may be divided into a plurality of storage slots, and each storage slot is used to store a network parameter group.

After the first target parameter is determined, such embodiments may be implemented to firstly determine whether a storage space in the target memory is sufficient, and write the first target parameter into the target memory only when the storage space is sufficient.

For example, in such embodiments, a first mapping relationship between the storage slots and the network parameters may be maintained in the cache or internal memory of the CPU. The first mapping relationship may be stored in a form of a mapping table. Since the network parameters respectively correspond to the feature data, in such embodiments, the network parameter may be represented by the feature sign of the feature data, and the storage slot in the target memory may be numbered. With the feature sign of the feature data as Key and the serial number of the storage slot (set as FId) as Value, the first mapping relationship may be expressed as a mapping table between Feasign and FId. Then, in such embodiments, a remaining storage slot in the target memory may be determined according to the first mapping relationship.

For example, the storage space of the target memory is divided into 100 storage slots in total, and the serial numbers for the 100 storage slots are integers from 0 to 99. If the first mapping relationship merely includes mapping information with serial numbers of 0 to 49, it may be determined that the number of remaining storage slot is 50.

After the remaining storage slot is determined, such embodiments may be implemented to compare the remaining storage slot with the number of network parameter groups in the first target parameter. If the number of network parameter groups in the first target parameter is less than the remaining storage slot, it is determined that the remaining storage slot meets a storage requirement of the first target parameter, and the CPU may transfer the first target parameter from the internal memory to the target memory. In an embodiment, the method of writing by group described above may be used when writing the network parameter into the target memory.

According to embodiments of the present disclosure, it is possible to achieve a management of the storage space of the graphics card memory by maintaining the first mapping relationship in the CPU, determining the remaining storage space of the target memory according to the first mapping relationship, and controlling the writing of network parameter based on this, so as to avoid an enormous pressure on the graphics card memory caused by excessive network parameters required by the embedding during the model training process, which may help to reduce a high requirement of a large-scale model training for a hardware condition, and help to perform a large-scale model training. Furthermore, in such embodiments, since the first mapping relationship is maintained in the internal memory or cache accessible by the CPU, compared with the technical solution of storing a hash table representing the mapping relationship in the graphics card memory in a related art, it is possible to fully use the graphics card memory for model training, which may also help to reduce the pressure on the graphics card memory and reduce the communication overhead between the CPU and the target processor.

It may be understood that, when it is determined that the remaining storage slot meets the storage requirement of the first target parameter, such embodiments may be further implemented to firstly allocate a storage slot in the remaining storage slot to a first target parameter, and write the first target parameter to the allocated storage slot. For example, if the first target parameter includes network parameters corresponding to 10 feature data, and the storage slots with serial numbers 0 to 49 in the target memory have already stored network parameters, then the storage slots with serial numbers 50 to 99 may be allocated to the first target parameter.

After the storage slot is allocated to the first target parameter, the first mapping relationship may be updated according to the serial number of the allocated storage slot (that is, as the identification information of the storage slot) and the identification information of the first target parameter (that is, the identification information of the feature data corresponding to the first target parameter). Then, the correspondence between the storage slot and the network parameter may be maintained in the first mapping relationship.

It may be understood that, in each round of training, such embodiments may be further implemented to write a third network parameter required by a prediction of the training data into the target memory, so that the computing core of the target processor may call the third target parameter and adjust the third network parameter according to a calling result. In general, the network parameters required by the prediction are densely distributed parameters and include a small amount of parameters. Writing all the network parameters required by the prediction into the target memory generally does not bring obvious pressure. In a recommendation model, the third network parameter may be, for example, a network parameter contained in a prediction network, and the prediction network may include, for example, a multilayer perceptron (MLP).

It may be understood that the training process of a deep learning model generally includes three parts. A first part is a process of a forward calculation to calculate a loss of the deep learning model, a second part is a process of a backward calculation to calculate a gradient, and a third part is a process of updating the network parameter of the deep learning model according to the gradient. The computing core may specifically adjust the first network parameter and the third network parameter according to the gradient obtained by backward calculation, so that the network parameter of the deep learning model gradually converges.

In an embodiment, when the remaining storage slot does not meet the storage requirement of the first target parameter, the CPU may, for example, transfer a temporarily unnecessary network parameter in the target memory to leave sufficient space for the first target parameter, so as to provide conditions for the subsequent training of the deep learning model. Through such embodiments, a size of a cache space in the target memory may be dynamically adjusted, and combined with the maintenance of the first mapping relationship in the internal memory, the communication overhead between the CPU and the target processor may be effectively reduced.

Exemplarily, the CPU may further maintain, in the cache or internal memory, a second mapping relationship between the storage slot and a parameter state of the network parameter stored in the storage slot, which is used as a basis for determining a transferable network parameter.

For example, the parameter state of the network parameter may include a reference state. When the network parameter is the network parameter required by the current training round, the reference state is set as referenced, and if the current training round does not need the network parameter, the reference state is set as not-referenced. For example, the reference state may be represented by a reference count (referred to as RefCount for short). If a value of the reference count is 1, it indicates the reference state of being referenced; if the value of the reference count is 0, it indicates the reference state of being not-referenced.

In such embodiments, the second mapping relationship is expressed by a mapping table containing the correspondence between FId, FeaSign and RefCount described above. Each FeaSign corresponds to respective RefCount, which is used to indicate whether the network parameter required by the embedding of the feature data identified by FeaSign is referenced or not. In such embodiments, the network parameter corresponding to the FeaSign with a RefCount value of 0 in the second mapping relationship may be used as a transferable network parameter.

For example, the parameter state of the network parameter may include a number of uses. When the network parameter is mobilized in a training round, the number of uses is increased by 1. An initial value of the number of uses may be 0. For example, the number of uses may be represented by a frequency count (referred to as FreqCount for short).

In such embodiments, the second mapping relationship is expressed by a mapping table containing the correspondence between FId, FeaSign and FreqCount described above. Each FeaSign corresponds to respective FreqCount, which is used to represent the number of uses of the network parameter required by the embedding of the feature data identified by the FeaSign. In such embodiments, the network parameter corresponding to the FeaSign of which the value of FreqCount in the second mapping relationship is less than a threshold may be used as a transferable network parameter.

For example, the parameter state of the network parameter may include both the reference state and the number of uses. The second mapping relationship is expressed by a mapping table containing the correspondence between Fid, FeaSign, RefCount and FreqCount described above. Each FeaSign corresponds to respective RefCount and FreqCount. In such embodiments, the network parameter that corresponds to the FeaSign of which the reference state is not-referenced and of which the number of uses is less than the threshold may be used as a transferable network parameter.

Through the methods of the above-mentioned embodiments, it is possible to transfer unnecessary network parameters in a timely manner as required, and leave sufficient storage slots for the training of the deep learning model, which may help to improve the training efficiency of the deep learning model.

Exemplarily, such embodiments may be further implemented to compare the first network parameter with the network parameter stored in the target memory, and determine the network parameter that does not belong to the first network parameter and that has the reference state of not-referenced as a transferable network parameter. For example, when determining the transferable network parameter, a number of groups of network parameters required to be transferred may be determined as a target group number, for example, according to the number of feature data corresponding to the first target parameter. Then, the target group number of network parameters with the reference state of not-referenced and a low frequency of uses are determined as transferable network parameters.

After the transferable network parameter is determined, the transferable network parameter may be transferred from the target memory to the internal memory. The first target parameter is written into the target memory after the transferable network parameter is transferred out. It may be understood that, similar to the above description, a remaining storage slot in the target memory may be allocated to the first target parameter when the first target parameter is written into the target memory. It may be understood that the remaining storage slot here includes a storage slot where the transferable network parameter is located. The first target parameter is then written into the allocated storage slot. After the storage slot is allocated, in such embodiments, the first mapping relationship and the second mapping relationship described above may be updated according to the identification information of the feature data corresponding to the first target parameter and the serial number of the storage slot allocated to the first target parameter.

For example, when updating the second mapping relationship, in addition to updating the mapping relationship between FId and FeaSign, it is also needed to update the parameter state of the first network parameter. For example, the reference state of the first network parameter may be changed to referenced, that is, the value of RefCount of the FeaSign corresponding to the first network parameter may be changed from 0 to 1. For example, the number of uses of the first network parameter may be increased by 1, that is, the FreqCount of the FeaSign corresponding to the first network parameter may be increased by 1.

In an embodiment, after the computing core completes the adjustment of the first network parameter, such embodiments may be further implemented to update the second mapping relationship, so as to update the reference state of the first network parameter. Specifically, the RefCount of FeaSign corresponding to the first network parameter may be changed from 1 to 0.

In an embodiment, a three-level cache structure composed of the target memory, the internal memory and the hard disk processor may be used to reduce a storage pressure of the internal memory and the target memory. As mentioned above, when writing the first target parameter into the target memory, the first target parameter may be read from the internal memory or the hard disk storage. The internal memory may be a cache of the hard disk storage, and when the memory usage is high, the CPU may write the data cached in the internal memory into the hard disk storage. The three-level cache structure may accelerate the search and retrieval of network parameters during the model training, and also facilitates the training of large-scale deep learning models. For example, the number of model parameters of a supported deep learning model may reach T level.

For example, when transferring the transferable network parameter from the target memory to the internal memory, the CPU may firstly determine whether a remaining storage space of the internal memory is less than a space threshold. If it is less than the space threshold, the internal memory is used as a cache, and the transferable network parameter is written into the hard disk storage via the internal memory. That is, the transferable network parameter is cached in the internal memory, and the transferable network parameter cached in the memory is written into the hard disk storage.

In an embodiment, when determining the first target parameter in the first network parameter, the first network parameter required by the embedding of the first training data may be firstly determined, for example, using the above-mentioned methods. Specifically, the feature data included in the first training data may be determined firstly, and all network parameters corresponding to the feature data may be used as the first network parameter. Then, a de-duplication is performed on the first network parameter to obtain de-duplicated network parameters. For example, a de-duplication may be performed on the first network parameter according to the identification information of the feature data. Then, the network parameter not stored in the target memory in the de-duplicated network parameters may be determined according to the first mapping relationship and the identification information of the de-duplicated network parameters, and the determined network parameter is used as the first target parameter.

For example, it is also possible to firstly perform a de-duplication on the feature data included in the first training data according to the identification information of the feature data. Then, the network parameter required by the embedding of the de-duplicated feature data is used as the de-duplicated network parameter.

The first training data generally includes a plurality of training data, and different training data may include the same feature data. If all the determined first network parameters are written into the target memory, there may be a case that a same network parameter is written into a plurality of slots of the target memory. In embodiments of the present disclosure, by performing a de-duplication on the first network parameter, the above-mentioned case may be avoided, and a waste of the storage space of the target memory may be reduced, which may help to improve a utilization rate of the storage space of the target memory, reduce the pressure on the target memory during the large-scale model training, and facilitate the large-scale model training.

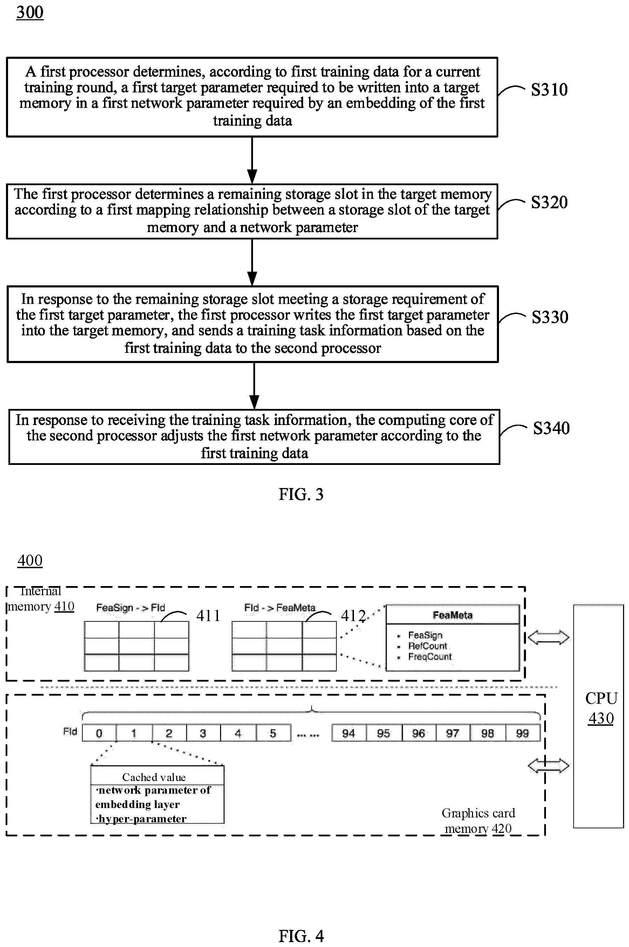

It may be understood that, after writing the first target parameter into the target memory, the CPU may further, for example, send a training task information based on the first training data to the target processor, so that the computing core of the target processor may process the first training data according to the first network parameter stored in the target memory, and adjust the first network parameter according to a processing result. Based on this, the present disclosure further provides another method of processing a model, which will be described in detail below with reference to FIG. 3.

FIG. 3 shows a schematic flowchart of a method of training a deep learning model according to another embodiment of the present disclosure.

As shown in FIG. 3, a method 300 of training a deep learning model in such embodiments may include operation S310 to operation S340. The method 300 of training the deep learning model may be performed by the above-mentioned electronic device.

In operation S310, a first processor determines, according to first training data for a current training round, a first target parameter required to be written into a target memory in a first network parameter required by an embedding of the first training data.

According to embodiments of the present disclosure, the first processor may be the above-mentioned CPU, and the target memory is a memory contained in a second processor. The second processor is similar to the above-mentioned target processor, and an implementation manner of operation S310 is similar to that of operation S210 described above, which will not be repeated here.

In operation S320, the first processor determines a remaining storage slot in the target memory according to a first mapping relationship between a storage slot of the target memory and a network parameter. The operation S320 is similar to the operation S220 described above, and details will not be repeated here.

In operation S330, in response to the remaining storage slot meeting a storage requirement of the first target parameter, the first processor writes the first target parameter into the target memory, and sends a training task information based on the first training data to the second processor.

In operation S340, in response to receiving the training task information, the computing core of the second processor adjusts the first network parameter according to the first training data.

According to embodiments of the present disclosure, an implementation manner of writing the first target parameter into the target memory is similar to the implementation manner of operation S230 described above, and details will not be repeated here.

According to embodiments of the present disclosure, the first processor may send the training task information based on the first training data to the second processor after writing the first target parameter into the target memory. After receiving the training task information, the computing core of the second processor may directly call the first network parameter stored in the target memory to process the first training data, and reversely calculate according to the processing result to obtain gradient data for the first training data, so as to adjust the first network parameter according to the gradient data.

According to embodiments of the present disclosure, the first processor may also send the training task information based on the first training data to the second processor during the process of writing the first target parameter into the target memory. After receiving the training task information, the computing core of the second processor may gradually call the network parameters stored in the target memory. When the required network parameters have not been written into the target memory, the execution of the training task may be temporarily suspended until the required network parameters may be read from the target memory.

According to embodiments of the present disclosure, the first processor may also write the first training data into the cache of the second processor while writing the first target parameter into the target memory. The training task information may include, for example, a forward calculation task information, a backward calculation task information, a parameter update task information, and the like. The forward calculation task information may include, for example, a calling information of the first training data, a calling information of the network parameter, a calculation information of a loss, and the like. The calling information of the network parameter may include the identification information of the network parameter required to be called, a calling sequence information of the network parameter, and the like. The backward calculation task information may include, for example, an information such as a learning rate. The parameter update task information may include, for example, an adjustment stride, etc.

According to embodiments of the present disclosure, it is possible to achieve a management of the storage space of the graphics card memory by maintaining the first mapping relationship in the CPU, determining the remaining storage space of the target memory according to the first mapping relationship, and controlling the writing of network parameter based on this, so as to avoid an enormous pressure on the graphics card memory caused by excessive network parameters required by the embedding during the model training process, which may help to reduce a high requirement of a large-scale model training for a hardware condition, and help to perform a large-scale model training. Furthermore, in such embodiments, since the first mapping relationship is maintained in the internal memory or cache accessible by the CPU, compared with the technical solution of storing a hash table representing the mapping relationship in the graphics card memory in a related art, it is possible to fully use the graphics card memory for model training, which may also help to reduce the pressure on the graphics card memory and reduce the communication overhead between the CPU and the target processor.

It may be understood that, in each round of training, such embodiments may be further implemented to write a third network parameter required by a prediction of the training data into the target memory, so that the computing core of the target processor may call the third target parameter and adjust the third network parameter according to a calling result.

In order to better understand the present disclosure, a structure of the processor cache used to implement the method of processing the model provided by the present disclosure will be described in detail below with reference to FIG. 4.

FIG. 4 shows a schematic structural diagram of a processor cache according to embodiments of the present disclosure.

As shown in FIG. 4, in an embodiment 400, in order to implement the method of training the deep learning model provided by the present disclosure, the structure of the processor cache may include an internal memory 410 and a target memory 420. Such embodiments are described by using a graphics card memory as the target memory 420 as an example. It may be understood that the target memory 420 may be any high bandwidth memory (HBM).

A first hash table 411 and a second hash table 412 may be maintained in the internal memory 410. The first hash table 411 is used to indicate the first mapping relationship described above, and the second hash table 412 is used to indicate the second mapping relationship described above. Specifically, the Key in the first hash table is the identification information FeaSign of the feature data, and the Value in the first hash table is the serial number of the storage slot in the graphics card memory 420. The Key in the second hash table is the serial number of the storage slot in the graphics card memory 420, and the Value is a tag information (Feature Meta, referred to as FeaMeta) of the feature data. The tag information may include the identification information FeaSign of the feature data, and the reference state RefCount and the number of uses FreqCount of the network parameter required by the embedding of the feature data.

For example, if the graphics card memory 420 in such embodiments is set to allow storage of at most 100 groups of network parameters for embedding 100 feature data, then the graphics card memory 420 includes 100 storage slots, and the serial numbers of the 100 storage slots are respectively 0, 1, 2, ..., 98, 99. The data cached in each storage slot may include a group of embedding layer network parameters and hyper-parameters required for adjusting the group of embedding layer network parameters.

When performing the corresponding operations of the above-mentioned method of training the deep learning model, the processor CPU 430 may determine the number of available storage slots in the graphics card memory 420 by querying the first mapping table, allocate a storage slot for the target parameter to be written into the graphics card memory 420 that is required by the embedding of the training data, and perform query, addition, deletion and other operations on the information in the first hash table 411 and the second hash table 412 stored in internal memory 410 as required.

When performing the corresponding operations of the above-mentioned method of training the deep learning model, the processor CPU 430 may further copy the data required to be cached to the graphics card memory 420 into the allocated storage slot, and copy the relevant network parameter from the graphics card memory 420 when the GPU and other target processors complete the adjustment of the network parameter and the storage slot needs to be vacated. During the model training process, the CPU 430 substantially plays a role of a cache manager.

In an embodiment, the graphics card memory 420 may be a memory in an artificial intelligence chip, and specifically may be a memory in a Kunlunxin2 chip. In such embodiments, it is possible to make full use of the computing power of the Kunlunxin 2 chip when performing the method of training the deep learning model, which may facilitate the training of large-scale recommendation model.

In an embodiment, a plurality of target processors may be provided in an electronic device, so that the target processors may perform parallel training on the deep learning model according to different training data, thereby improving the efficiency of model training.

For example, the above-mentioned target processor includes a plurality of processors, and in a round of training, a plurality of batches of data may be acquired, which constitute the first training data. In such embodiments, only the network parameter required by the embedding of each batch of data may be written into the target memory of the processor corresponding to that batch of data, so as to reduce the cache pressure of the target memory in the target processor.

For example, in such embodiments, when writing the first target parameter into the target memory, the parameter required by the embedding of a batch of data corresponding to each processor in the first target parameter may be firstly determined as a specified parameter for that processor. Then, parameters other than the specified parameter in the first target parameter are replaced by a predetermined parameter, so as to obtain a parameter to be written for that processor. The number of parameters in the parameter to be written is the same as the number of parameters in the first target parameter. Then, the parameter to be written is written into the target memory included in each processor according to the storage slot allocated for the first target parameter. In this way, the number of network parameters and the distribution of network parameters stored in the plurality of target memories included in the plurality of target processors may be the same. The predetermined parameter may be a null value, which may help to synchronize network parameters through communication between the plurality of target processors in addition to reducing the cache pressure of the target memory in the target processor.

For example, the plurality of target processors may synchronize the calculated gradient data of the network parameters according to the network parameters stored in the target memories and the slots where the network parameters are located. In this way, the communication overhead between the target processor and the CPU may be reduced.

Specifically, the computing core of each processor may perform a forward calculation and a backward calculation according to the network parameter and a batch of training data corresponding to that processor, so as to obtain gradient data for the first network parameter. For example, the computing core may acquire the network parameter required by the embedding and prediction of the feature data from the target memory according to the feature data in the corresponding batch of training data, process the feature data according to the network parameter so as to obtain a processing result, and then determine a loss of the deep learning model for the batch of data according to the processing result, so as to complete the task of forward calculation. Subsequently, the gradient data for the first network parameter is calculated by using a back propagation algorithm according to the loss and the network parameter required by the embedding and prediction of the feature data, so as to complete the task of backward calculation. Finally, the gradient data for the first network parameter obtained by other target processors is acquired according to communication between the storage slot where the first network parameter is located and other target processors. Furthermore, the gradient data for the third network parameter for prediction obtained by other target processors may also be acquired through communication with other target processors. Finally, all the gradient data are collected, and the first network parameter and the third network parameter are adjusted according to a collection result, so as to complete the parameter update task.

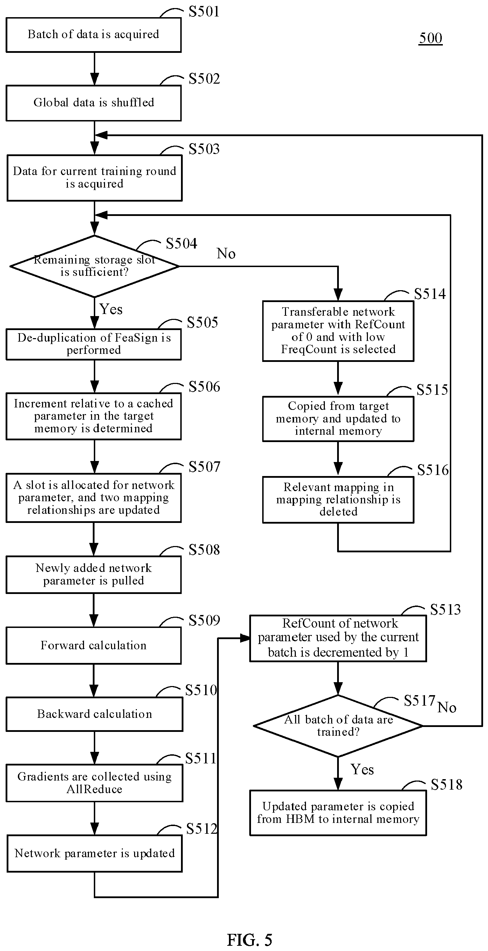

An overall flow of the method of training the deep learning model will be described in detail below with reference to FIG. 5.

FIG. 5 shows an overall schematic flowchart of a method of training a deep learning model according to embodiments of the present disclosure.

As shown in FIG. 5, a method 500 of training a deep learning model in such embodiments may include operation S501 to operation S518. Operations S509 to S512 are performed by the above-mentioned target processors, and the other operations are performed by the CPU.

In operation S501, a batch of data is acquired. Specifically, a predetermined number of sample data may be acquired from a hard disk storage or an external database, so as to train the deep learning model.

In operation S502, the data is globally shuffled, so as to improve a randomness of the training data obtained in batches.

In operation S503, data for a current training round is acquired. For example, batch_size*number of cards of training data may be randomly acquired from the batch of data as the above-mentioned first training data. The number of cards refers to the number of target processors provided in the electronic device. The batch_size may be set according to actual needs. For example, the batch_size may be determined according to the storage capacity of the target memory in the target processor. For example, the number of network parameters required by the embedding of batch_size training data may be related to the storage capacity of the target memory. Specifically, the number of storage slots in the target memory may be twice the number of groups of network parameters required by the embedding.

In operation S504, it is determined whether the remaining storage slot of the target memory is sufficient. If it is sufficient, operation S505 to operation S513 may be performed, otherwise operation S514 to operation S516 may be performed. It may be understood that the plurality of target processors may be set as processors of a same model, and the plurality of target memories included in the plurality of target processors have equal storage capacities.

In operation S505, a de-duplication is performed on the network parameter required by the embedding of the first training data according to the FeaSign of the feature data included in the first training data, so as to obtain the above-mentioned de-duplicated network parameter.

In operation S506, an increment relative to a cached parameter in the target memory is determined. That is, the de-duplicated network parameter is compared with the network parameter stored in the target memory according to the first mapping relationship, and the network parameter required to be written into the target memory is determined, so as to obtain the above-mentioned first target parameter.

In operation S507, a storage slot is allocated for the network parameter required to be written into the target memory, and the first mapping relationship and the second mapping relationship are updated according to an allocation result. Specifically, the mapping relationship between FId and FeaSign may be added to the first mapping relationship, the mapping relationship between FId and FeaMeta may be added to the second mapping relationship, and the FeaMeta data of the feature data corresponding to each group of network parameters in the first network parameter is updated. Specifically, each of RefCount and FreqCount may be increased by 1.

In operation S508, the newly added network parameter is copied (pulled) into the target memory. Specifically, the parameter to be written for each target memory may be determined according to the above-mentioned predetermined parameter, and the parameter to be written may be written to into the allocated storage slot. Then, each target processor may call the network parameter in the target memory, and perform operation S509 to operation S512 according to a batch of training samples. It may be understood that the third network parameter of the prediction network may also be copied into the target memory included in each of the plurality of target processors.

In operation S509, a forward calculation task is performed to obtain a loss of the deep learning model for the batch of training samples.

In operation S510, a backward calculation task is performed to calculate the gradient data for a batch of training samples according to the loss. The gradient data may include the gradient data for the first network parameter and the gradient data for the third network parameter.

In operation S511, the gradient data obtained by the plurality of target processors are collected using an Allreduce algorithm. It may be understood that the storage slot where the first network parameter is located needs to be used as a reference when collecting the gradient data for the first network parameter, due to a difference in the values of the first network parameters stored in different target memories.

In operation S512, the value of the network parameter stored in the target memory is updated according to the collection result. The collection result may include, for example, calculating an average value of all gradient data for each network parameter so as to obtain a final gradient, and updating the value of each network parameter according to the final gradient.

In operation S513, the RefCount value of the feature data corresponding to the network parameter used by the current batch of data is decremented by 1. So far, the target processor has completed the adjustment of the network parameter according to the first training data.

In operation S514, the transferable network parameter having the RefCount of 0 and having a low FreqCount is selected. The RefCount of the feature data corresponding to the transferable network parameter is 0, and the value of the FreqCount is less than a number threshold.

In operation S515, the transferable network parameter is pulled from the target memory, and the pulled transferable network parameter is cached in the internal memory.

In operation S516, the mapping relationship between FeaSign and FId of the feature data corresponding to the transferable network parameter in the first mapping relationship is deleted. After operation S516 is performed, the process may return to perform operation S504 to re-determine whether the remaining storage slot is sufficient.

According to embodiments of the present disclosure, after the target processor completes the adjustment of the network parameter according to the first training data, the CPU may perform, for example, operation S517 to determine whether all the acquired batches of data have been trained, that is, whether the acquired batches of data have been used as training data to train the deep learning model. If yes, operation S518 is then performed to pull the updated network parameter stored in the target memory (for example, HMB) and write the updated network parameter into the internal memory or the hard disk storage. If not, the process may return to perform operation S503 to start the training of the next training round.

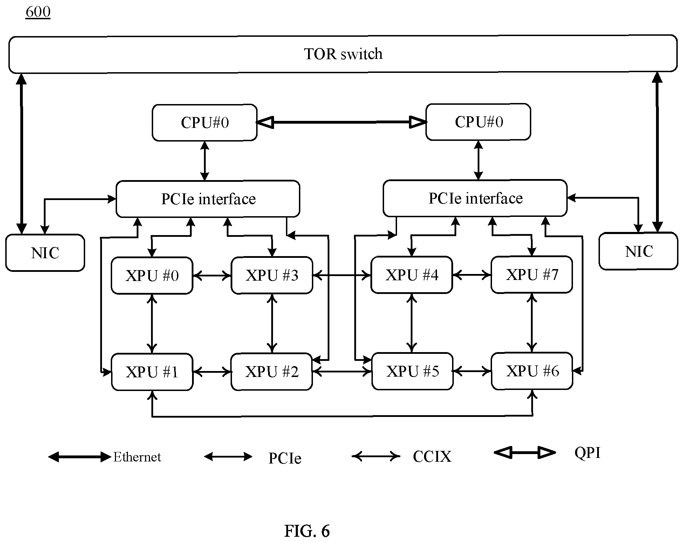

In order to better understand the method of training the deep learning model provided by the present disclosure, a detailed description will be given below in conjunction with a communication topology of a single-machine multi-card processor provided in FIG. 6.

FIG. 6 shows a communication topology diagram of a single-machine multi-card processor according to embodiments of the present disclosure.

As shown in FIG. 6, in an embodiment 600, an electronic device of a single-machine multi-card structure may include one CPU and four XPUs, for example, XPU#0 to XPU#3. The CPU may be communicatively connected to the four XPUs, for example, through a PCIe (Peripheral Component Interconnect Express) interface. A network interface controller (NIC) is used to connect the electronic device with a local area network. The NIC may be connected to a TOR switch via Ethernet, for example, so that the electronic device is connected to a local area network. The XPU may refer to a Kunlunxin chip, specifically a Kunlunxin 2 chip, for example.

For the four XPUs, XPU#0 and XPU#1, XPU#0 and XPU#3, XPU#1 and XPU#2, and XPU#2 and XPU#3 may be connected through Cache Coherency Interconnect Protocol (CCIX) to form a processor ring. CCIX may achieve an inter-chip interconnection in which two or more devices may share data through cache coherence. Such structure of inter-chip interconnection provides a basis for the use of Allreduce algorithm. It may be understood that the topology shown in FIG. 6 may be a communication topology of the Kunlunxin2 chip, through which AllReduce communication supporting partial sparse parameter (network parameter for embedding) may be achieved. It may be understood that, in such embodiments, each XPU may broadcast all gradient data to other XPUs and receive all gradient data of other XPUs so as to adjust the network parameter. In this manner, the gradient data broadcast by XPU#0 may be, for example, forwarded to XPU#2 via XPU#3, XPU#1 or CPU#1.

In an embodiment, as shown in FIG. 6, when training the deep learning model, two or more electronic devices may be used. The plurality of electronic devices may be connected via a local area network, and the CPUs in the plurality of electronic devices may be communicatively connected via a common system interface (QPI). QPI is an architecture for achieving an inter-chip interconnection.

Based on the network architecture provided by the present disclosure, since the AllReduce communication of Sparse parameters may be achieved, it is possible to achieve a synchronous training of a deep learning model by a plurality of target processors, to achieve the training of large-scale deep learning model, and to reduce the communication overhead.

According to embodiments of the present disclosure, the deep learning model may also be trained in an asynchronous pipeline manner, so as to improve the efficiency of model training.

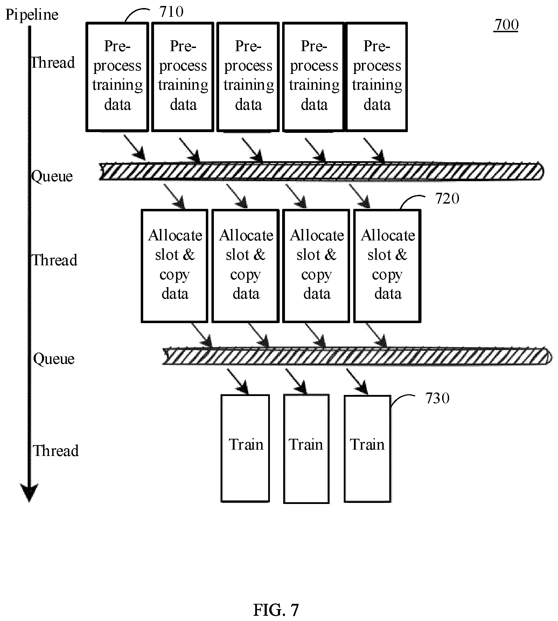

FIG. 7 shows a schematic diagram of training a model in a form of an asynchronous pipeline according to embodiments of the present disclosure.

As shown in FIG. 7, in an embodiment 700, an asynchronous pipeline design may be performed when training the deep learning model. For example, when the computing core of the target processor performs a training task 730 for the current training round, the CPU may perform a pre-processing 710 on the training data for the next training round, allocate a slot for the target parameter required to be written into the target memory after the pre-processing is completed, and copy the target parameter to the target memory. That is, a task 720 of allocating slots and copying data is performed. Then, after the computing core has performed the training task 730 for the current training round, a training task for the next training round may be performed directly. In this way, the efficiency of model training may be effectively improved, the waiting time between two adjacent rounds of iterative training may be reduced, and the utilization rate of the target processor may be improved.

Specifically, in the embodiment 700, in response to the computing core training the first network parameter according to the first training data, the CPU may determine, according to second training data for the next training round, a second target parameter required to be written into the target memory in a second network parameter required by the embedding of the second training data; then determine a remaining storage slot in the target memory according to the first mapping relationship between the storage slot of the target memory and the network parameter; and then allocate a storage slot for the second target parameter and write the second target parameter into the target memory when the remaining storage slot meets the storage requirement of the second target parameter.

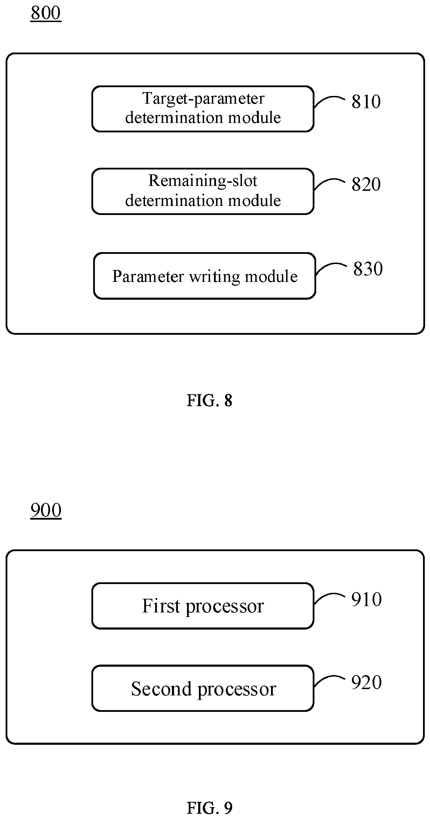

Based on the method of training the deep learning model provided in the present disclosure, the present disclosure further provides an apparatus of training a deep learning model, which will be described in detail below with reference to FIG. 8.

FIG. 8 shows a structural block diagram of an apparatus of training a deep learning model according to embodiments of the present disclosure.

As shown in FIG. 8, an apparatus 800 of training a deep learning model in such embodiments may include a target-parameter determination module 810, a remaining-slot determination module 820, and a parameter writing module 830.

The target-parameter determination module 810 may be used to determine, according to first training data for a current training round, a first target parameter required to be written into a target memory in a first network parameter required by an embedding of the first training data. The target memory is a memory contained in a target processor. In an embodiment, the target-parameter determination module 810 may be used to perform operation S210 described above, and details will not be repeated here.

The remaining-slot determination module 820 may be used to determine a remaining storage slot in the target memory according to a first mapping relationship between a storage slot of the target memory and a network parameter. In an embodiment, the remaining-slot determination module 820 may be used to perform operation S220 described above, and details will not be repeated here.

The parameter writing module 830 may be used to write, in response to the remaining storage slot meeting a storage requirement of the first target parameter, the first target parameter into the target memory so that a computing core contained in the target processor adjusts the first network parameter according to the first training data. In an embodiment, the parameter writing module 830 may be used to perform operation S230 described above, and details will not be repeated here.

According to embodiments of the present disclosure, the apparatus 800 may further include: a slot allocation module used to allocate a storage slot in the remaining storage slot for the first target parameter in response to the remaining storage slot meeting the storage requirement of the first target parameter; and a first relationship update module used to update the first mapping relationship according to an identification information of the storage slot allocated for the first target parameter and an identification information of the first target parameter. The parameter writing module 830 is further used to write the first target parameter into the storage slot allocated for the first target parameter.

According to embodiments of the present disclosure, the target parameter determination module 810 may include: a required-parameter determination sub-module used to determine the first network parameter required by the embedding of the first training data; a de-duplication sub-module used to perform a de-duplication on the first network parameter so as to obtain a de-duplicated network parameter; and a target-parameter determination sub-module used to determine, according to the first mapping relationship and an identification information of the de-duplicated network parameter, a network parameter not stored in the target memory in the de-duplicated network parameter as the first target parameter.

According to embodiments of the present disclosure, the apparatus 800 may further include: a transferable-parameter determination module used to determine a transferable network parameter in a network parameter stored in the target memory, in response to the remaining storage slot not meeting the storage requirement of the first target parameter; and a parameter transfer module used to transfer the transferable network parameter from the target memory to an internal memory. The parameter writing module 830 is further used to write the first target parameter into the target memory in response to the transferable network parameter being transferred to the internal memory.

According to embodiments of the present disclosure, the transferable-parameter determination module is further used to determine, according to a second mapping relationship between a storage slot of the target memory and a parameter state of a network parameter stored in the storage slot, a network parameter of which the parameter state is a target state as the transferable network parameter. The parameter state includes at least one of a reference state or a number of uses; the target state includes at least one of: the reference state is not-referenced, or the number of uses is less than a number threshold. The apparatus 800 further includes: a slot allocation module used to allocate a remaining storage slot in the target memory for the first target parameter in response to the transferable network parameter being transferred to the internal memory; and a second relationship update module used to update the second mapping relationship according to the storage slot allocated for the first target parameter and a storage slot in which parameters other than the first target parameter in the first network parameter are located, so as to update the parameter state of the first network parameter.

According to embodiments of the present disclosure, the second relationship update module is further used to update the second mapping relationship in response to the computing core completing an adjustment of the first network parameter, so as to update the reference state of the first network parameter.

According to embodiments of the present disclosure, the parameter transfer module is further used to write the transferable network parameter into a hard disk storage via the internal memory in response to a remaining storage space of the internal memory being less than a space threshold.

According to embodiments of the present disclosure, the target-parameter determination module 810 is further used to determine, according to second training data for a next training round, a second target parameter required to be written into the target memory in a second network parameter required by an embedding of second training data, in response to the computing core training the first network parameter according to the first training data. The remaining-slot determination module 820 is further used to: determine a remaining storage slot in the target memory according to the first mapping relationship between the storage slot of the target memory and the network parameter. The parameter writing module 830 is further used to: write the second target parameter into the target memory in response to the remaining storage slot meeting a storage requirement of the second target parameter.

According to embodiments of the present disclosure, the target processor includes a plurality of processors; the first training data includes a plurality of batches of data respectively corresponding to the plurality of processors. The parameter writing module 830 may include: a specified-parameter determination sub-module used to, for each processor in the plurality of processors, determine a specified parameter required by an embedding of a batch of data corresponding to the processor in the first target parameter; a parameter replacement sub-module used to replace parameters other than the specified parameter in the first target parameter by a predetermined parameter value, so as to obtain a parameter to be written for the processor; and a writing sub-module used to write the parameter to be written into the target memory contained in the processor, so that the computing core contained in the processor trains the specified parameter according to the batch of data corresponding to the processor.

According to embodiments of the present disclosure, for each batch of data in the plurality of batches of data, a number of network parameters required by the embedding of the batch of data is related to a storage capacity of the target memory in the processor corresponding to the batch of data.

According to embodiments of the present disclosure, the parameter writing module 830 is further used to write a third network parameter required by a prediction of the plurality of batches of data into the target memory in each processor, so that the computing core contained in the processor adjusts the third network parameter according to the batch of data corresponding to the processor.

Based on the method of training the deep learning model provided in another embodiment of the present disclosure, the present disclosure further provides a system of training a deep learning model, which will be described in detail below with reference to FIG. 9.

FIG. 9 shows a structural block diagram of a system of training a deep learning model according to embodiments of the present disclosure.

As shown in FIG. 9, a system 900 of training a deep learning model in such embodiments may include a first processor 910 and a second processor 920, and the second processor includes a target memory and a computing core.

The first processor 910 is used to: determine, according to first training data for a current training round, a first target parameter required to be written into a target memory in a first network parameter required by an embedding of the first training data; determine a remaining storage slot in the target memory according to a first mapping relationship between a storage slot of the target memory and a network parameter; and write, in response to the remaining storage slot meeting a storage requirement of the first target parameter, the first target parameter into the target memory, and transmit a training task information based on the first training data to the second processor. It may be understood that the first processor may be used to perform operation S310 to operation S330 described above, and details will not be repeated here.

The second processor 920 is used to: adjust, by using a computing core in response to receiving the training task information, the first network parameter according to the first training data.

According to embodiments of the present disclosure, the second processor includes a plurality of processors; the first training data includes a plurality of batches of data respectively corresponding to the plurality of processors. The first processor 910 is used to write the first target parameter into the target memory by: for each processor in the plurality of processors, determining a specified parameter required by an embedding of a batch of data corresponding to the processor in the first target parameter; replacing parameters other than the specified parameter in the first target parameter by a predetermined parameter, so as to obtain a parameter to be written for the processor; and writing the parameter to be written into the target memory contained in the processor.

According to embodiments of the present disclosure, the plurality of processors are connected via Cache Coherency Interconnect Protocol to form a processor ring. Each processor in the plurality of processors is used to adjust the first network parameter by: performing, by the computing core, a forward calculation and a backward calculation according to the specified parameter and a batch of data corresponding to the processor, so as to obtain gradient data for the first network parameter; and adjusting the first network parameter by using an Allreduce algorithm according to the gradient data for the first network parameter, the gradient data obtained by other processors in the plurality of processors, and the storage slot in which the first network parameter is located.

According to embodiments of the present disclosure, the second processor includes an artificial intelligence chip; and the artificial intelligence chip includes a Kunlunxin2 chip.

It should be noted that in technical solutions of the present disclosure, a collection, a storage, a use, a processing, a transmission, a provision, a disclosure, an application and other processing of user personal information involved comply with provisions of relevant laws and regulations, take necessary security measures, and do not violate public order and good custom. In the technical solutions of the present disclosure, the acquisition or collection of user personal information has been authorized or allowed by users.

According to embodiments of the present disclosure, the present disclosure further provides an electronic device, a readable storage medium, and a computer program product.

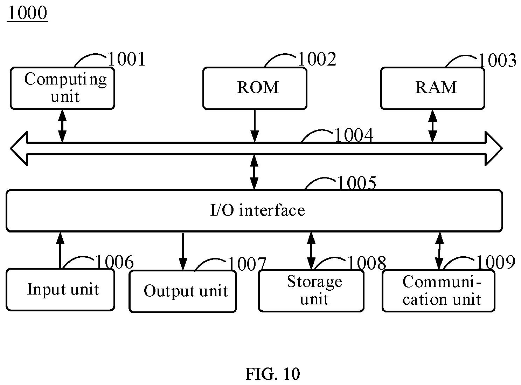

FIG. 10 shows a schematic block diagram of an example electronic device 1000 for implementing the method of training the deep learning model according to embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 10, the electronic device 1000 includes a computing unit 1001 which may perform various appropriate actions and processes according to a computer program stored in a read only memory (ROM) 1002 or a computer program loaded from a storage unit 1008 into a random access memory (RAM) 1003. In the RAM 1003, various programs and data necessary for an operation of the electronic device 1000 may also be stored. The computing unit 1001, the ROM 1002 and the RAM 1003 are connected to each other through a bus 1004. An input/output (I/O) interface 1005 is also connected to the bus 1004.

A plurality of components in the electronic device 1000 are connected to the I/O interface 1005, including: an input unit 1006, such as a keyboard, or a mouse; an output unit 1007, such as displays or speakers of various types; a storage unit 1008, such as a disk, or an optical disc; and a communication unit 1009, such as a network card, a modem, or a wireless communication transceiver. The communication unit 1009 allows the electronic device 1000 to exchange information/data with other devices through a computer network such as Internet and/or various telecommunication networks.

The computing unit 1001 may be various general-purpose and/or dedicated processing assemblies having processing and computing capabilities. Some examples of the computing units 1001 include, but are not limited to, a central processing unit (CPU), a graphics processing unit (GPU), various dedicated artificial intelligence (Al) computing chips, various computing units that run machine learning model algorithms, a digital signal processing processor (DSP), and any suitable processor, controller, microcontroller, etc. The computing unit 1001 executes various methods and processes described above, such as the method of training the deep learning model. For example, in some embodiments, the method of training the deep learning model may be implemented as a computer software program which is tangibly embodied in a machine-readable medium, such as the storage unit 1008. In some embodiments, the computer program may be partially or entirely loaded and/or installed in the electronic device 1000 via the ROM 1002 and/or the communication unit 1009. The computer program, when loaded in the RAM 1003 and executed by the computing unit 1001, may execute one or more steps in the method of training the deep learning model described above. Alternatively, in other embodiments, the computing unit 1001 may be used to perform the method of training the deep learning model by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, speech input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. A relationship between the client and the server is generated through computer programs running on the corresponding computers and having a client-server relationship with each other. The server may be a cloud server, also known as a cloud computing server or a cloud host, which is a host product in a cloud computing service system to solve shortcomings of difficult management and weak service scalability existing in a conventional physical host and VPS (Virtual Private Server) service. The server may also be a server of a distributed system or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of training a deep learning model, comprising:
determining, according to first training data for a current training round, a first target parameter required to be written into a target memory in a first network parameter required by an embedding of the first training data, wherein the target memory is a memory contained in a target processor;
determining a remaining storage slot in the target memory according to a first mapping relationship between a storage slot of the target memory and a network parameter; and
writing, in response to the remaining storage slot meeting a storage requirement of the first target parameter, the first target parameter into the target memory so that a computing core contained in the target processor adjusts the first network parameter according to the first training data.

2. The method of claim 1, further comprising:
allocating a storage slot in the remaining storage slot for the first target parameter in response to the remaining storage slot meeting the storage requirement of the first target parameter; and
updating the first mapping relationship according to an identification information of the storage slot allocated for the first target parameter and an identification information of the first target parameter,
wherein the writing the first target parameter into the target memory comprises: writing the first target parameter into the storage slot allocated for the first target parameter.

3. The method of claim 1, wherein the determining a first target parameter required to be written into a target memory in a first network parameter required by an embedding of the first training data comprises:
determining the first network parameter required by the embedding of the first training data;
performing a de-duplication on the first network parameter so as to obtain a de-duplicated network parameter; and
determining, according to the first mapping relationship and an identification information of the de-duplicated network parameter, a network parameter not stored in the target memory in the de-duplicated network parameter as the first target parameter.

4. The method of claim 1, further comprising:
determining a transferable network parameter in a network parameter stored in the target memory, in response to the remaining storage slot not meeting the storage requirement of the first target parameter;
transferring the transferable network parameter from the target memory to an internal memory; and
writing the first target parameter into the target memory in response to the transferable network parameter being transferred to the internal memory.

5. The method of claim 4, wherein the determining a transferable network parameter in network parameters stored in the target memory comprises:
determining, according to a second mapping relationship between a storage slot of the target memory and a parameter state of a network parameter stored in the storage slot, a network parameter of which the parameter state is a target state as the transferable network parameter,
wherein the parameter state comprises at least one of a reference state or a number of uses; the target state comprises at least one of: the reference state is not-referenced, or the number of uses is less than a number threshold;
the method further comprises:
allocating a remaining storage slot in the target memory for the first target parameter in response to the transferable network parameter being transferred to the internal memory; and
updating the second mapping relationship according to the storage slot allocated for the first target parameter and a storage slot in which parameters other than the first target parameter in the first network parameter are located, so as to update the parameter state of the first network parameter.

6. The method of claim 5, further comprising:
updating the second mapping relationship in response to the computing core completing an adjustment of the first network parameter, so as to update the reference state of the first network parameter.

7. The method of claim 4, wherein the transferring the transferable network parameter from the target memory to an internal memory comprises:
writing the transferable network parameter into a hard disk storage via the internal memory in response to a remaining storage space of the internal memory being less than a space threshold.

8. The method of claim 1, further comprising:
determining, according to second training data for a next training round, a second target parameter required to be written into the target memory in a second network parameter required by an embedding of second training data, in response to the computing core training the first network parameter according to the first training data;
determining a remaining storage slot in the target memory according to the first mapping relationship between the storage slot of the target memory and the network parameter; and
writing the second target parameter into the target memory in response to the remaining storage slot meeting a storage requirement of the second target parameter.

9. The method of claim 1, wherein the target processor comprises a plurality of processors; the first training data comprises a plurality of batches of data respectively corresponding to the plurality of processors; and the writing the first target parameter into the target memory comprises:
for each processor in the plurality of processors, determining a specified parameter required by an embedding of a batch of data corresponding to the processor in the first target parameter;
replacing parameters other than the specified parameter in the first target parameter by a predetermined parameter value, so as to obtain a parameter to be written for the processor; and
writing the parameter to be written into the target memory contained in the processor, so that the computing core contained in the processor trains the specified parameter according to the batch of data corresponding to the processor.

10. The method of claim 9, wherein for each batch of data in the plurality of batches of data, a number of network parameters required by the embedding of the batch of data is related to a storage capacity of the target memory in the processor corresponding to the batch of data.

11. The method of claim 9, further comprising:
writing a third network parameter required by a prediction of the plurality of batches of data into the target memory in each processor, so that the computing core contained in the processor adjusts the third network parameter according to the batch of data corresponding to the processor.

12. A method of training a deep learning model, comprising:
determining, by using a first processor according to first training data for a current training round, a first target parameter required to be written into a target memory in a first network parameter required by an embedding of the first training data, wherein the target memory is a memory contained in a second processor;
determining, by using the first processor, a remaining storage slot in the target memory according to a first mapping relationship between a storage slot of the target memory and a network parameter;
writing, by using the first processor in response to the remaining storage slot meeting a storage requirement of the first target parameter, the first target parameter into the target memory, and transmitting a training task information to the second processor, wherein the training task information is based on the first training data; and
adjusting, by using a computing core of the second processor in response to receiving the training task information, the first network parameter according to the first training data.

13. The method of claim 12, wherein the second processor comprises a plurality of processors; the first training data comprises a plurality of batches of data respectively corresponding to the plurality of processors; the writing the first target parameter into the target memory comprises:
for each processor in the plurality of processors, determining a specified parameter required by an embedding of a batch of data corresponding to the processor in the first target parameter;
replacing parameters other than the specified parameter in the first target parameter by a predetermined parameter, so as to obtain a parameter to be written for the processor; and
writing the parameter to be written into the target memory contained in the processor.

14. The method of claim 13, wherein the plurality of processors are connected via Cache Coherency Interconnect Protocol to form a processor ring; the adjusting the first network parameter according to the first training data comprises:
performing, by the computing core of each processor in the plurality of processors, a forward calculation and a backward calculation according to the specified parameter and a batch of data corresponding to the processor, so as to obtain gradient data for the first network parameter; and
adjusting, by the processor, the first network parameter by using an Allreduce algorithm according to the gradient data for the first network parameter, the gradient data obtained by other processors in the plurality of processors, and the storage slot in which the first network parameter is located.

15. The method of any one of claims 12 to 14, wherein the second processor comprises an artificial intelligence chip; and the artificial intelligence chip comprises a Kunlunxin2 chip.

16. An apparatus of training a deep learning model, comprising:
a target-parameter determination module configured to determine, according to first training data for a current training round, a first target parameter required to be written into a target memory in a first network parameter required by an embedding of the first training data, wherein the target memory is a memory contained in a target processor;
a remaining-slot determination module configured to determine a remaining storage slot in the target memory according to a first mapping relationship between a storage slot of the target memory and a network parameter; and
a parameter writing module configured to write, in response to the remaining storage slot meeting a storage requirement of the first target parameter, the first target parameter into the target memory so that a computing core contained in the target processor adjusts the first network parameter according to the first training data.

17. The apparatus of claim 16, further comprising:
a slot allocation module configured to allocate a storage slot in the remaining storage slot for the first target parameter in response to the remaining storage slot meeting the storage requirement of the first target parameter; and
a first relationship update module configured to update the first mapping relationship according to an identification information of the storage slot allocated for the first target parameter and an identification information of the first target parameter,
wherein the parameter writing module is further configured to: write the first target parameter into the storage slot allocated for the first target parameter.

18. The apparatus of claim 16, wherein the target parameter determination module comprises:
a required-parameter determination sub-module configured to determine the first network parameter required by the embedding of the first training data;
a de-duplication sub-module configured to perform a de-duplication on the first network parameter so as to obtain a de-duplicated network parameter; and
a target-parameter determination sub-module configured to determine, according to the first mapping relationship and an identification information of the de-duplicated network parameter, a network parameter not stored in the target memory in the de-duplicated network parameter as the first target parameter.

19. The apparatus of claim 16, further comprising:
a transferable-parameter determination module configured to determine a transferable network parameter in a network parameter stored in the target memory, in response to the remaining storage slot not meeting the storage requirement of the first target parameter; and
a parameter transfer module configured to transfer the transferable network parameter from the target memory to an internal memory;
wherein the parameter writing module is further configured to write the first target parameter into the target memory in response to the transferable network parameter being transferred to the internal memory.

20. The apparatus of claim 19, wherein the transferable-parameter determination module is further configured to:
determine, according to a second mapping relationship between a storage slot of the target memory and a parameter state of a network parameter stored in the storage slot, a network parameter of which the parameter state is a target state as the transferable network parameter,
wherein the parameter state comprises at least one of a reference state or a number of uses; the target state comprises at least one of: the reference state is not-referenced, or the number of uses is less than a number threshold;
the apparatus further comprises:
a slot allocation module configured to allocate a remaining storage slot in the target memory for the first target parameter in response to the transferable network parameter being transferred to the internal memory; and
a second relationship update module configured to update the second mapping relationship according to the storage slot allocated for the first target parameter and a storage slot in which parameters other than the first target parameter in the first network parameter are located, so as to update the parameter state of the first network parameter.

21. The apparatus of claim 20, wherein the second relationship update module is further configured to:
update the second mapping relationship in response to the computing core completing an adjustment of the first network parameter, so as to update the reference state of the first network parameter.

22. The apparatus of claim 19, wherein the parameter transfer module is further configured to:
write the transferable network parameter into a hard disk storage via the internal memory in response to a remaining storage space of the internal memory being less than a space threshold.

23. The apparatus of claim 16, wherein:
the target-parameter determination module is further configured to: determine, according to second training data for a next training round, a second target parameter required to be written into the target memory in a second network parameter required by an embedding of second training data, in response to the computing core training the first network parameter according to the first training data;
the remaining-slot determination module is further configured to: determine a remaining storage slot in the target memory according to the first mapping relationship between the storage slot of the target memory and the network parameter; and
the parameter writing module is further configured to: write the second target parameter into the target memory in response to the remaining storage slot meeting a storage requirement of the second target parameter.

24. The apparatus of claim 16, wherein the target processor comprises a plurality of processors; the first training data comprises a plurality of batches of data respectively corresponding to the plurality of processors; and the parameter writing module comprises:
a specified-parameter determination sub-module configured to, for each processor in the plurality of processors, determine a specified parameter required by an embedding of a batch of data corresponding to the processor in the first target parameter;
a parameter replacement sub-module configured to replace parameters other than the specified parameter in the first target parameter by a predetermined parameter value, so as to obtain a parameter to be written for the processor; and
a writing sub-module configured to write the parameter to be written into the target memory contained in the processor, so that the computing core contained in the processor trains the specified parameter according to the batch of data corresponding to the processor.

25. The apparatus of claim 24, wherein for each batch of data in the plurality of batches of data, a number of network parameters required by the embedding of the batch of data is related to a storage capacity of the target memory in the processor corresponding to the batch of data.

26. The apparatus of claim 24, wherein the parameter writing module is further configured to:
write a third network parameter required by a prediction of the plurality of batches of data into the target memory in each processor, so that the computing core contained in the processor adjusts the third network parameter according to the batch of data corresponding to the processor.

27. A system of training a deep learning model, comprising a first processor and a second processor, wherein the second processor comprises a target memory and a computing core;
the first processor is configured to:
determine, according to first training data for a current training round, a first target parameter required to be written into a target memory in a first network parameter required by an embedding of the first training data;
determine a remaining storage slot in the target memory according to a first mapping relationship between a storage slot of the target memory and a network parameter; and
write, in response to the remaining storage slot meeting a storage requirement of the first target parameter, the first target parameter into the target memory, and transmit a training task information to the second processor, wherein the training task information is based on the first training data; and
the second processor is configured to: adjust, by using a computing core in response to receiving the training task information, the first network parameter according to the first training data.

28. The system of claim 27, wherein the second processor comprises a plurality of processors; the first training data comprises a plurality of batches of data respectively corresponding to the plurality of processors; the first processor is configured to write the first target parameter into the target memory by:
for each processor in the plurality of processors, determining a specified parameter required by an embedding of a batch of data corresponding to the processor in the first target parameter;
replacing parameters other than the specified parameter in the first target parameter by a predetermined parameter, so as to obtain a parameter to be written for the processor; and
writing the parameter to be written into the target memory contained in the processor.

29. The system of claim 28, wherein the plurality of processors are connected via Cache Coherency Interconnect Protocol to form a processor ring; each processor is configured to adjust the first network parameter by:
performing, by the computing core, a forward calculation and a backward calculation according to the specified parameter and a batch of data corresponding to the processor, so as to obtain gradient data for the first network parameter; and
adjusting the first network parameter by using an Allreduce algorithm according to the gradient data for the first network parameter, the gradient data obtained by other processors in the plurality of processors, and the storage slot in which the first network parameter is located.

30. The system of any one of claims 27 to 29, wherein the second processor comprises an artificial intelligence chip; and the artificial intelligence chip comprises a Kunlunxin2 chip.

31. An electronic device, comprising:
at least one processor; and
a memory communicatively connected to the at least one processor, wherein the memory stores instructions executable by the at least one processor, and the instructions are configured to, when executed by the at least one processor, cause the at least one processor to implement the method of any one of claims 1 to 15.

32. A non-transitory computer-readable storage medium having computer instructions therein, wherein the computer instructions are configured to cause a computer to implement the method of any one of claims 1 to 15.

33. A computer program product containing computer program/instructions, wherein the computer program/instructions is/are configured to, when executed by a processor, cause the processor to implement steps of the method of any one of claims 1 to 15.
